# EUROPEAN PATENT SPECIFICATION

(11) **EP 2 190 052 B1**
(45) Date of publication and mention of the grant of the patent: **25.12.2013**
(21) Application number: 08831436.4
(22) Date of filing: 22.09.2008
(51) Int. Cl.: H01M 8/04, H01M 8/10, H01M 8/06

(54) **FUEL CELL SYSTEM**
BRENNSTOFFZELLENSYSTEM
SYSTÈME DE PILE À COMBUSTIBLE

(30) Priority: 21.09.2007 JP 2007245739
(43) Date of publication of application: 26.05.2010
(73) Proprietor: Panasonic Corporation, Kadoma-shi Osaka 571-8501 (JP)
(72) Inventor: YUKIMASA, Akinori c/o Panasonic Corporation,, Chuo-ku, Osaka-shi, Osaka 540-6207 (JP); TANAKA, Yoshikazu c/o Panasonic Corporation,, Chuo-ku, Osaka-shi, Osaka 540-6207 (JP); NAKAMURA, Akinari c/o Panasonic Corporation,, Chuo-ku, Osaka-shi, Osaka 540-6207 (JP); OZEKI, Masataka c/o Panasonic Corporation,, Chuo-ku, Osaka-shi, Osaka 540-6207 (JP)
(74) Representative: Leinweber & Zimmermann
(86) International application number: PCT/JP2008/002612
(87) International publication number: WO 2009/037864

(56) References cited:
- JP-A- 7 135 012
- JP-A- 8 138 704
- JP-A- 8 138 705
- JP-A- 2003 051 329
- JP-A- 2004 022 225
- JP-A- 2004 139 854
- JP-A- 2006 066 107
- JP-A- 2006 216 241
- JP-A- 2008 117 686

## Description

### Technical Field

The present invention relates to the configuration of a fuel cell system.

### Background Art

A fuel cell system capable of carrying out highly-efficient, small-scale electric power generation has been developed as a distributed power generating system capable of realizing high energy use efficiency, since it is easy to configure a system for utilizing heat energy generated when carrying out the electric power generation.

The fuel cell system includes a fuel cell as a main body of an electric power generating portion of the system. The fuel cell directly converts chemical energies of a fuel gas and an oxidation gas into an electric energy by a predetermined electrochemical reaction. The electric energy generated in the fuel cell is supplied from the fuel cell system to a load.

Known as a fuel cell used in such fuel cell system is a polymer electrolyte fuel cell. In the polymer electrolyte fuel cell, used as a polymer electrolyte is a solid polymer electrolyte membrane having a proton conductivity. The solid polymer electrolyte membrane needs to be wet. If the solid polymer electrolyte membrane is dry or not adequately wet, the proton conductivity deteriorates, and this reduces an electric power generating performance. Therefore, known is a fuel cell in which at least one of the fuel gas and the oxidizing gas is humidified by a humidifier to be supplied (see Patent Document 1 for example). Moreover, known as the humidifier is a humidifier which humidifies the fuel gas and/or the oxidizing gas by introducing at least one of the fuel gas and the oxidizing gas, and cooling water for cooling down the fuel cell, to passages defined by a water permeable membrane (see Patent Document 2 for example).

When stopping an electric power generating operation of the fuel cell system, the supply of a raw material, such as a natural gas, to a hydrogen generator stops. This stops the supply of the fuel gas from the hydrogen generator to the fuel cell, so that the electrochemical reaction in the fuel cell stops. Thus, the supply of electric power from the fuel cell system to the load stops. After the fuel cell system stops, an internal temperature of the fuel cell system becomes lower than that of the fuel cell system which is generating the electric power. Therefore, the volume of the material gas in the fuel cell decreases, so that the pressure in the fuel cell becomes a negative pressure. This leads to inflowing of external oxygen into the fuel cell, or damages on components, such as a gasket, of the fuel cell. On this account, known is a fuel cell system in which a suitable material gas is supplied to the fuel cell as a pressure compensating gas to prevent the pressure in the fuel cell from becoming the negative pressure (see Patent Document 3 for example).
Patent Document 1: Japanese Laid-Open Patent Application Publication 2005-294223
Patent Document 2: Japanese Laid-Open Patent Application Publication Hei 7-288134
Patent Document 3: Japanese Laid-Open Patent Application Publication 2006-066107

### Disclosure of the Invention

### Problems to be Solved by the Invention

However, in a case where the humidifier disclosed in Patent Document 2 is used when the pressure compensating gas, such as the material gas, is supplied to the fuel cell to prevent the pressure in the fuel cell from becoming the negative pressure after the fuel cell system stops as with the fuel cell system disclosed in Patent Document 3, there is the possibility that the pressure in a cooling water passage becomes higher than the pressure in a fuel gas passage to which the pressure compensating gas is supplied or the pressure in an oxidizing gas passage to which the pressure compensating gas is supplied, and this causes the material gas to leak through the water permeable membrane to the cooling water passage. The pressure compensating gas having leaked to the cooling water passage remains in the cooling water passage to close the cooling water passage, thereby disturbing a normal operation of the fuel cell system.

The present invention was made in view of these problems, and an object of the present invention is to provide a fuel cell system capable of suppressing a phenomenon in which when carrying out a pressure compensating operation, the pressure compensating gas leaks through the humidifier to the cooling water passage, and this disturbs normal circulation of the cooling water in the cooling water passage.

### Means for Solving the Problems

To solve the above problems, a fuel cell system according to the present invention includes: a fuel cell; a gas passage through which an electric power generating gas used for electric power generation in the fuel cell flows; a cooling water passage through which cooling water for cooling down the fuel cell flows; a cooling water tank disposed on the cooling water passage to store the cooling water; a humidifier having a moisture permeable membrane and being configured to carry out moisture exchange between the cooling water flowing through the cooling water passage and the electric power generating gas flowing through the gas passage via the moisture permeable membrane; and a pressure compensating gas supplier configured to supply a pressure compensating gas to a specific section including the humidifier on the gas passage when a pressure in the gas passage lowers, wherein a water surface of the cooling water tank is higher than an upper end of the moisture permeable membrane of the humidifier.

With this, when the pressure compensating gas is supplied to the gas passage to prevent the inside of the gas passage including the fuel cell from becoming the negative pressure after the fuel cell system stops, the water pressure of the cooling water is higher than the pressure of the pressure compensating gas in the humidifier. Therefore, it is possible to suppress a phenomenon in which the pressure compensating gas leaks through the moisture permeable membrane of the humidifier to the cooling water passage and remains in the cooling water passage, and this disturbs the normal circulation of the cooling water in the cooling water passage.

Moreover, in the fuel cell system according to the present invention, the water surface of the cooling water tank may be located such that a pressure in the cooling water passage in the humidifier is higher than the pressure in the gas passage in the humidifier when the pressure compensating gas supplier supplies the pressure compensating gas.

Moreover, in the fuel cell system according to the present invention, the water surface of the cooling water tank may be located such that a water head differential pressure between an entrance of the humidifier on the cooling water passage and the cooling water tank is higher than a pressure of the pressure compensating gas supplied from the pressure compensating gas supplier to the specific section including the humidifier on the gas passage.

Moreover, the fuel cell system according to the present invention may further include a closing device configured to close both ends of the specific section including the humidifier on the gas passage, wherein the pressure compensating gas supplier may be configured to supply the pressure compensating gas to the specific section when both ends of the specific section are closed by the closing device, and a pressure in the specific section lowers.

Moreover, in the fuel cell system according to the present invention, the cooling water tank may be open to atmosphere.

Moreover, the fuel cell system according to the present invention may further include a pressure compensating gas supplying passage through which the pressure compensating gas supplied from the pressure compensating gas supplier flows, wherein the cooling water tank may be hermetically sealed, and the pressure compensating gas supplying passage may be connected to the cooling water tank.

Moreover, the fuel cell system according to the present invention may further include: a water level detector configured to detect a water level of the cooling water tank; a water supplier configured to supply the cooling water to the cooling water tank; and a controller, wherein the controller may cause the water supplier to supply the water to the cooling water tank when the water level detected by the water level detector becomes less than a water level threshold.

Moreover, in the fuel cell system according to the present invention, a water level of the cooling water tank may be higher than the upper end of the moisture permeable membrane of the humidifier by 25 cm or more.

The above object, other objects, features and advantages of the present invention will be made clear by the following detailed explanation of preferred embodiments with reference to the attached drawings.

### Effects of the Invention

In accordance with the fuel cell system of the present invention, it is possible to suppress a phenomenon in which when carrying out the pressure compensating operation with respect to the gas passage including the humidifier configured to humidify by the cooling water the reactant gas supplied to the fuel cell, the pressure compensating gas leaks through the humidifier to the cooling water passage and remains in the cooling water passage, and this disturbs the normal circulation of the cooling water in the cooling water passage.

### Brief Description of the Drawings

[Fig. 1] Fig. 1 is a schematic diagram showing a schematic configuration of a fuel cell system according to Embodiment 1 of the present invention.
[Fig. 2] Fig. 2 is a cross-sectional view schematically showing a schematic configuration of a cell stack of a fuel cell of the fuel cell system shown in Fig. 1.
[Fig. 3] Fig. 3 is a cross-sectional view schematically showing a schematic configuration of a fuel gas humidifier shown in Fig. 1.
[Fig. 4] Fig. 4 is a diagram showing the flow of a purge gas and the flow of a pressure compensating gas in a stop operation of the fuel cell system shown in Fig. 1.
[Fig. 5] Fig. 5 is a schematic diagram showing a schematic configuration of the fuel cell system according to Embodiment 2 of the present invention.
[Fig. 6] Fig. 6 is a schematic diagram showing a schematic configuration of the fuel cell system according to Embodiment 3 of the present invention.

### Explanation of Reference Numbers

- 1: polymer electrolyte membrane
- 2a: anode
- 2b: cathode
- 3: MEA (Membrane-Electrode-Assembly; electrolyte membrane-electrode assembly)
- 4: gasket
- 5a: anode separator
- 5b: cathode separator
- 6: fuel gas channel
- 7: oxidizing gas channel
- 8: cooling water channel
- 9: cell
- 11: fuel gas internal passage
- 12: oxidizing gas internal passage
- 61: separator
- 62: moisture permeable membrane
- 63: humidifying cell
- 64: fuel gas supplying manifold hole
- 65: cooling water supplying manifold hole
- 66: cooling water channel
- 67: fuel gas channel
- 69: humidifying cell stack body
- 90: cell stack
- 100: fuel cell system
- 101: fuel cell
- 102: fuel processor
- 102a: burner
- 103: fuel gas humidifier
- 104: oxidizing gas supplier
- 105: oxidizing gas humidifier
- 106: cooling water tank
- 107: heat exchanger
- 108: controller
- 109: water level detector
- 110: material gas supplier (pressure compensating gas supplier)
- 110a: pressure increasing device
- 110b: on-off valve
- 111: pressure detector
- 112: material gas humidifier
- 121: first switching device
- 121a: first port
- 121b: second port
- 121c: third port
- 122: second switching device
- 122a: first port
- 122b: second port
- 122c: third port
- 123: third switching device
- 123a: first port
- 123b: second port
- 123c: third port
- 124: off gas passage on-off valve
- 125: oxidizing gas discharging passage on-off valve
- 126: material gas supplying passage on-off valve
- 131: material gas supplying passage
- 131a: first material gas supplying passage
- 131b: second material gas supplying passage
- 132: fuel gas supplying passage
- 132a: first fuel gas supplying passage
- 132b: second fuel gas supplying passage
- 133: off gas passage
- 133a: first off gas passage
- 133b: second off gas passage
- 134: oxidizing gas supplying passage
- 134a: first oxidizing gas supplying passage
- 134b: first oxidizing gas supplying passage
- 135: oxidizing gas discharging passage
- 135a: first oxidizing gas discharging passage
- 135b: second oxidizing gas discharging passage
- 136: bypass passage
- 137: cathode bypass passage
- 138: pressure compensating gas supplying passage
- 141: first pump
- 142: second pump
- 143: third pump
- 151: city water supplying passage
- 152: cooling water supplying passage
- 153: cooling water discharging passage
- 153a: first cooling water discharging passage
- 153b: first cooling water discharging passage
- 154: water circulating passage
- 154a: water outward route
- 154b: water return route
- 164: fuel gas supplying manifold
- 165: cooling water supplying manifold

### Best Mode for Carrying Out the Invention

Hereinafter, preferred embodiments of the present invention will be explained in reference to the drawings. In the drawings, same reference numbers are used for the same or corresponding components, and a repetition of the same explanation is avoided.

### Embodiment 1

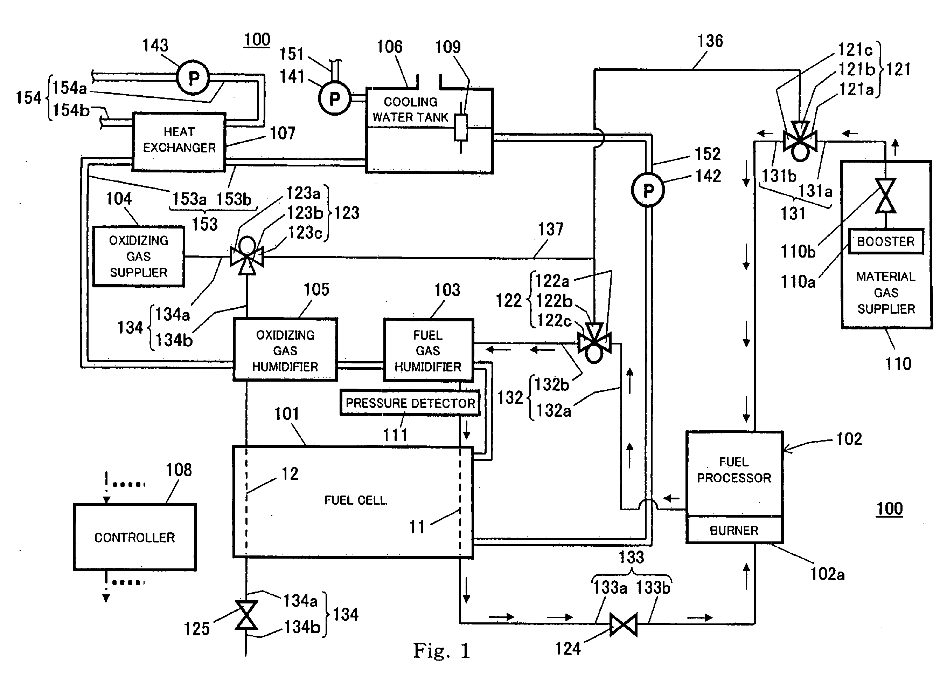

Fig. 1 is a schematic diagram showing a schematic configuration of a fuel cell system according to Embodiment 1 of the present invention, and schematically shows the flow of electric power generating gases at the time of electric power generation in a fuel cell. Here, the electric power generating gases are gases contributing to the electric power generation in the fuel cell, and include not only reactant gases, such as a fuel gas (hydrogen gas) and an oxidizing gas (oxygen gas), which directly contribute to the electric power generation in the fuel cell but also, for example, a material gas which indirectly contributes to the electric power generation in the fuel cell as a raw material for generating the fuel gas.

### Configuration of Fuel Cell System

As shown in Fig. 1, a fuel cell system 100 according to Embodiment 1 includes a fuel cell 101, a fuel gas supplying system, an oxidizing gas supplying system, a temperature adjusting system, and a controller 108. The fuel gas supplying system is configured to supply the fuel gas to the fuel cell 101, and the oxidizing gas supplying system is configured to supply the oxidizing gas to the fuel cell 101.

First, the configuration of the fuel cell 101 will be explained.

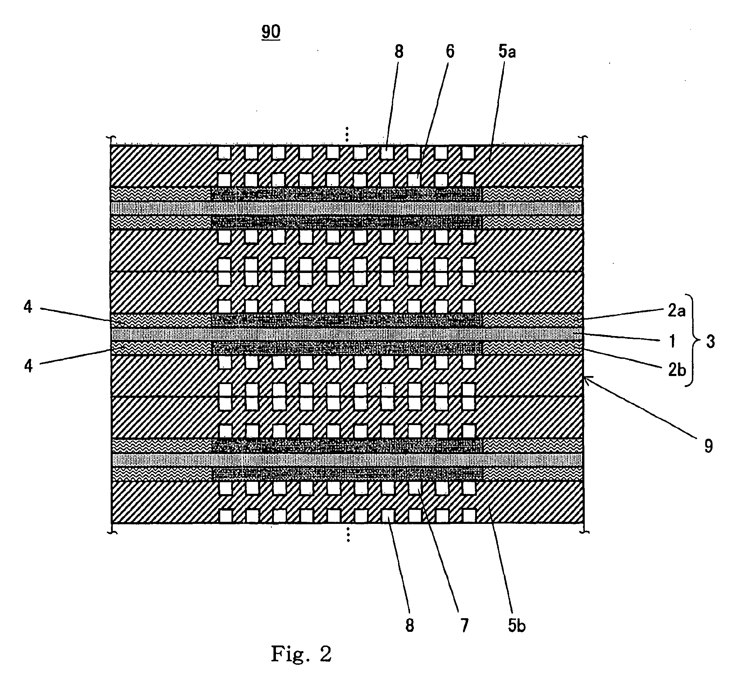

Herein, the fuel cell 101 is constituted by a polymer electrolyte fuel cell, and is constituted by a cell stack formed by stacking cells 9, each of whose entire shape is a plate shape, in a thickness direction of the cell 9. Here, the cell 9 will be explained in reference to Fig. 2.

Fig. 2 is a cross-sectional view schematically showing a schematic configuration of the cell stack of the fuel cell 101 of the fuel cell system 100 shown in Fig. 1.

As shown in Fig. 2, the cell 9 includes a MEA 3 (Membrane-Electrode-Assembly; electrolyte membrane-electrode assembly), gaskets 4, an anode separator 5a, and a cathode separator 5b. The MEA 3 includes a polymer electrolyte membrane 1 which selectively transports hydrogen ions, an anode 2a, and a cathode 2b. The anode 2a and the cathode 2b (which are referred to as "gas diffusion electrodes") are disposed to be located at inner regions, respectively, of both surfaces of the polymer electrolyte membrane 1 which regions are located on an inner side of a peripheral portion of the polymer electrolyte membrane 1. Each of the anode 2a and the cathode 2b includes: a catalyst layer (not shown) which contains, as a major component, carbon powder carrying platinum-based metal catalyst; and a gas diffusion layer (not shown) which is disposed on the catalyst layer and has both gas permeability and electrical conductivity.

Moreover, a pair of ring-shaped gaskets 4 made of rubber are disposed around the anode 2a and the cathode 2b, respectively, so as to sandwich the polymer electrolyte membrane 1. An electrically-conductive anode separator 5a and an electrically-conductive cathode separator 5b are disposed to sandwich the MEA3 and the gaskets 4. A groove-like fuel gas channel 6 through which the fuel gas flows is formed on a main surface (hereinafter referred to as "inner surface") of the anode separator 5a which surface contacts the MEA 3, and a groove-like oxidizing gas channel 7 through which the oxidizing gas flows is formed on a main surface (hereinafter referred to as "inner surface") of the cathode separator 5b which surface contacts the MEA 3. In addition, a cooling water channel 8 through which the cooling water flows is formed on each of outer surfaces of the anode separator 5a and the cathode separator 5b (hereinafter referred to as "separators 5a and 5b").

A fuel gas supplying manifold hole, a fuel gas discharging manifold hole, an oxidizing gas supplying manifold hole, an oxidizing gas discharging manifold hole, a cooling water supplying manifold hole, and a cooling water discharging manifold hole (all of which are not shown) which are through holes extending in the thickness direction are formed at each of peripheral portions of the polymer electrolyte membrane 1, the gaskets 4, and the separators 5a and 5b.

By stacking such cells 9 in the thickness direction, a cell stack body is formed. Then, by placing a current collector, an insulating plate, and an end plate (all of which are not shown) on each of both ends of the cell stack body, and fastening these components by fasteners (not shown), a cell stack 90 is formed. By stacking the cells 9, the manifold holes, such as the fuel gas supplying manifold hole, formed on the polymer electrolyte membrane 1, the gaskets 4, and the separators 5a and 5b are connected to one another in the thickness direction to form manifolds, such as a fuel gas supplying manifold. The fuel gas supplying manifold, a fuel gas discharging manifold, and the fuel gas channels 6 formed on the respective anode separators 5a to connect the fuel gas supplying manifold and the fuel gas discharging manifold constitute a fuel gas internal passage 11 (see Fig. 1). An oxidizing gas supplying manifold, an oxidizing gas discharging manifold, and the oxidizing gas channels 7 formed on the respective cathode separators 5b to connect the oxidizing gas supplying manifold and the oxidizing gas discharging manifold constitute an oxidizing gas internal passage 12 (see Fig. 1). A cooling water supplying manifold, a cooling water discharging manifold, and the cooling water channels 8 formed on the respective separators 5a and 5b to connect the cooling water supplying manifold and the cooling water discharging manifold constitute a cooling water internal passage (not shown).

Next, the configuration of the fuel gas supplying system will be explained in reference to Fig. 1.

The fuel gas supplying system includes a material gas supplier 110, a fuel processor 102, and a fuel gas humidifier 3. The fuel processor 102 includes a burner 102a, a reformer, a shift converter, and a CO remover (not shown), and is configured to cause the material gas (methane for example) and water, supplied from the outside of the fuel cell system 100, to react with each other to generate a hydrogen-rich fuel gas. Specifically, a downstream end of a material gas supplying passage 131 is connected to the fuel processor 102, and an upstream end thereof is connected to the material gas supplier 110.

A city gas pipe, not shown, is connected to the material gas supplier 110. The material gas supplier 110 includes an on-off valve 110b and a pressure increasing device 110a. A desulfurizer is included in the material gas supplying passage 110 so as to be located upstream of the pressure increasing device 110a. The desulfurizer adsorbs and removes (desulfrizes) a sulfur compound contained in the material gas as an odorant, and the pressure increasing device 110a supplies the desulfrized material gas to the material gas supplying passage 131 while adjusting a flow rate of the material gas and increasing a pressure of the material gas. Herein, the on-off valve 110b and the pressure increasing device 110a in the material gas supplier 110 serve as a purge gas supplier for supplying the material gas as a purge gas to the fuel gas internal passage 11 of the fuel cell 101, and the on-off valve 110b in the material gas supplier 110 also serves as a pressure compensating gas supplier for supplying the material gas as a pressure compensating gas to the fuel gas internal passage 11 of the fuel cell 101. Moreover, herein, methane is used as the material gas. However, the present embodiment is not limited to this. As the material gas, a gas containing an organic compound constituted by at least carbon and hydrogen can be used. Examples are gases, such as ethane and propane, containing hydrocarbon, and gases containing gaseous alcohol.

The material gas supplying passage 131 includes first and second the material gas supplying passages 131a and 131b. An upstream end of the first material gas supplying passage 131a is connected to the material gas supplier 110, and a downstream end thereof is connected to a first port 121a of a first switching device 121 that is a three-way valve. Moreover, an upstream end of the second material gas supplying passage 131b is connected to a third port 121c of the first switching device 121, and a downstream end thereof is connected to the fuel processor 102. An upstream end of a bypass passage 136 is connected to a second port 121b of the first switching device 121.

The burner 102a of the fuel processor 102 is connected to the fuel cell 101 by a below-described off gas passage 133. The fuel gas unconsumed in the fuel cell 101 is supplied to the burner 102a as an off gas. The burner 102a burns the off gas (or the material gas supplied through a passage, not shown) supplied from the fuel cell 101 through the off gas passage 133 and combustion air supplied from a combustion air supplier (not shown) to generate a combustion gas.

By utilizing heat transfer from the combustion gas generated in the burner 102a, the reformer of the fuel processor 102 carries out a reforming reaction between the material gas and water supplied through a passage, not shown, to generate a hydrogen-rich reformed gas. Then, the shift converter and the CO remover carries out a shift reaction and an oxidation reaction of the reformed gas generated in the reformer to generate the hydrogen-rich fuel gas whose carbon monoxide is reduced to about 1 ppm.

An upstream end of a first fuel gas supplying passage 132a is connected to an exit of the CO remover of the fuel processor 102, and a downstream end thereof is connected to a first port 122a of a second switching device (closing device) 122 that is a three-way valve. An upstream end of a second fuel gas supplying passage 132b is connected to a third port 122c of the second switching device 122, and a downstream end thereof is connected to an entrance of the fuel gas internal passage 11 (to be precise, the fuel gas supplying manifold) of the fuel cell 101. The fuel gas humidifier 103 is disposed on a portion of the second fuel gas supplying passage 132b to humidify the fuel gas flowing through a fuel gas supplying passage 132. Moreover, a pressure detector 111 is disposed on the second fuel gas supplying passage 132b so as to be located downstream of the fuel gas humidifier 103, and is configured to detect the pressure of the gas flowing through the second fuel gas supplying passage 132b. Then, the pressure detector 111 transmits the detected pressure to the controller 108. Herein, used as the pressure detector 111 is a differential pressure gauge. Further, a downstream end of the bypass passage 136 is connected to a second port 122b of the second switching device 122. The first fuel gas supplying passage 132a and the second fuel gas supplying passage 132b constitute the fuel gas supplying passage 132.

With this, at the time of the operation of the fuel cell system 100, the fuel gas generated in the fuel processor 102 is humidified by the fuel gas humidifier to be supplied to the anode 2a of the fuel cell 101. Moreover, as will be described later, at the time of a stop operation of the fuel cell system 100 or after the completion of the stop operation of the fuel cell system 100, the material gas is supplied as the purge gas or the pressure compensating gas from the material gas supplier 110 through the bypass passage 136 to the fuel gas internal passage 11 of the fuel cell 101. Therefore, in the present embodiment, the material gas supplier 110 (especially, the on-off valve 110b) also serves as the pressure compensating gas supplier.

Moreover, an upstream end of a first off gas passage 133a is connected to an exit of the fuel gas internal passage 11 (to be precise, the fuel gas discharging manifold) of the fuel cell 101, and a downstream end thereof is connected to an off gas passage on-off valve 124. Further, an upstream end of a second off gas passage 133b is connected to the off gas passage on-off valve 124, and a downstream end thereof is connected to the burner 102a of the fuel processor 102. With this, the fuel gas generated in the fuel processor 102 is humidified by the fuel gas humidifier 103 to be supplied to the anode of the fuel cell 101, and the unreacted fuel gas is supplied to the burner 102a as the off gas. The first off gas passage 133a and the second off gas passage 133b constitute the off gas passage 133.

Next, the configuration of the oxidizing gas supplying system will be explained.

The oxidizing gas supplying system includes an oxidizing gas supplier 104 and an oxidizing gas humidifier 105. As described above, the oxidizing gas supplier 104 is configured to supply the oxidizing gas to the fuel cell 101. Herein, used as the oxidizing gas supplier 104 is a blower.

An upstream end of a first oxidizing gas supplying passage 134a is connected to the oxidizing gas supplier 104, and a downstream end thereof is connected to a first port 123a of a third switching device (closing device) 123 that is a three-way valve. An upstream end of a second oxidizing gas supplying passage 134b is connected to a second port 123b of the third switching device 123, and a downstream end thereof is connected to an entrance of an oxidizing gas internal passage 12 (to be precise, the oxidizing gas supplying manifold) of the fuel cell 101. The oxidizing gas humidifier 105 is disposed on a portion of the second oxidizing gas supplying passage 134b to humidify the oxidizing gas flowing through the second oxidizing gas supplying passage 134b. Moreover, a downstream end of a cathode bypass passage 137 is connected to a third port 123c of the third switching device 123, and an upstream end thereof is connected to a portion of the bypass passage 136. The first oxidizing gas supplying passage 134a and the second oxidizing gas supplying passage 134b constitute an oxidizing gas supplying passage 134.

With this, at the time of the operation of the fuel cell system 100, the oxidizing gas supplied from the oxidizing gas supplier 104 through the oxidizing gas supplying passage 134 is humidified by the oxidizing gas humidifier 105 to be supplied to the cathode 2b of the fuel cell 101. Moreover, at the time of the termination of the operation of the fuel cell system 100, the purge gas or the pressure compensating gas is supplied through the cathode bypass passage 137 to the oxidizing gas internal passage 12 of the fuel cell 101.

Moreover, an upstream end of a first oxidizing gas discharging passage 135a is connected to an exit of the oxidizing gas internal passage 12 (to be precise, the oxidizing gas discharging manifold) of the fuel cell 101, and a downstream end thereof is connected to an oxidizing gas discharging passage on-off valve 125. Moreover, an upstream end of a second oxidizing gas discharging passage 135b is connected to the oxidizing gas discharging passage on-off valve 125, a downstream end thereof is open to an outside of the fuel cell system 100. With this, the humidified oxidizing gas is supplied to the cathode of the fuel cell 101, and the unused oxidizing gas is discharged to the outside of the fuel cell system 100. The first oxidizing gas discharging passage 135a and the second oxidizing gas discharging passage 135b constitute an oxidizing gas discharging passage 135.

Then, the material gas supplying passage 131, the fuel gas supplying passage 132, the fuel gas internal passage 11, the off gas passage 133, the oxidizing gas supplying passage 134, the oxidizing gas internal passage 12, and the oxidizing gas discharging passage 135 constitute a gas passage.

Next, the configuration of the temperature adjusting system will be explained.

The temperature adjusting system includes a cooling water tank 106 and a heat exchanger 107, and is configured to maintain the inside of the fuel cell 101 at a predetermined temperature. The cooling water tank 106 is constituted by a container, and an upper end portion thereof is open to the atmosphere. A city water supplying passage 151 through which city water is supplied is connected to an upper portion of the cooling water tank 106, and a water level detector 109 for detecting the water level of the water stored in the cooling water tank 106 is disposed in the cooling water tank 106. Moreover, a first pump 141 for adjusting the flow rate of water flowing through the city water supplying passage 151 is disposed on a portion of the city water supplying passage 151. The water level detector 109 transmits the detected water level to the controller 108, and the controller 108 controls the first pump 141 based on this water level information to adjust the water level of the water stored in the cooling water tank 106.

Moreover, an upstream end of a cooling water supplying passage 152 is connected to a lower portion of the cooling water tank 106, and a downstream end thereof is connected to an entrance of the cooling water internal passage (to be precise, the cooling water supplying manifold) of the fuel cell 101. A second pump 142 is disposed on a portion of the cooling water supplying passage 152. With this, the cooling water is supplied from the cooling water tank 106 through the cooling water supplying passage 152 to the fuel cell 101.

An upstream end of a first cooling water discharging passage 153a is connected to an exit of the cooling water internal passage (to be precise, the cooling water discharging manifold) of the fuel cell 101, and a downstream end thereof is connected to one end of a primary passage (not shown) of the heat exchanger 107. The fuel gas humidifier 103 is disposed on a portion of the first cooling water discharging passage 153a, and the oxidizing gas humidifier 105 is disposed on the first cooling water discharging passage 153a so as to be located downstream of the fuel gas humidifier 103. To be specific, the fuel gas humidifier 103 is disposed on both the second fuel gas supplying passage 132b and the first cooling water discharging passage 153a. Similarly, the oxidizing gas humidifier 105 is disposed on both the second oxidizing gas supplying passage 134b and the first cooling water discharging passage 153a. Moreover, an upstream end of a second cooling water discharging passage 153b is connected to the other end of the primary passage (not shown) of the heat exchanger 107, and a downstream end thereof is connected to the cooling water tank 106. A downstream end of a water outward route 154a constituting a water circulating passage 154 is connected to one end of a secondary passage (not shown) of the heat exchanger 107, and an upstream end thereof is connected to a hot water tank, not shown. Moreover, an upstream end of a water return route 154b constituting the water circulating passage 154 is connected to the other end of the secondary passage of the heat exchanger 107, and a downstream end thereof is connected to the hot water tank. A third pump 143 is disposed on a portion of the water outward route 154a. The first cooling water discharging passage 153a and the second cooling water discharging passage 153b constitute a cooling water discharging passage 153, and the cooling water supplying passage 152 and the cooling water discharging passage 153 constitute a cooling water passage.

With this, the cooling water having flowed through the inside of the fuel cell 101 to recover the exhaust heat humidifies the fuel gas in the fuel gas humidifier 103 and the oxidizing gas in the oxidizing gas humidifier 106, and carries out heat exchange in the heat exchanger 107 with the water flowing through the water circulating passage.

Then, the fuel cell 101 causes the fuel gas supplied to the anode 2a and the oxidizing gas supplied to the cathode 2b to electrochemically react with each other to generate water, electricity, and heat. The generated electricity is supplied from an output control unit constituted by an inverter and the like, not shown, to an external electric load. Moreover, the generated heat circulates the cooling water internal passage of the fuel cell 101 and is discharged outside by the cooling water. Thus, the inside of the fuel cell 101 is maintained at a predetermined temperature.

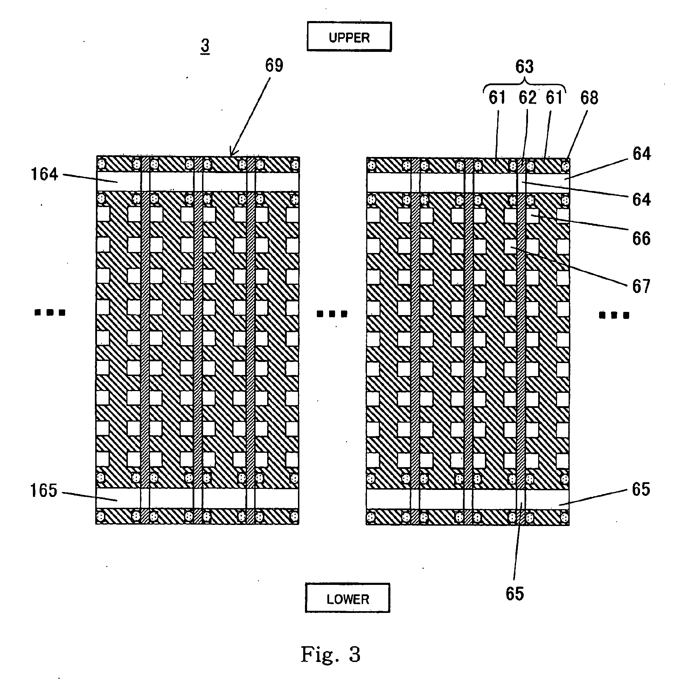

Here, the configurations of the fuel gas humidifier 103 and the oxidizing gas humidifier 105 will be explained in detail in reference to Fig. 3. Since the fuel gas humidifier 103 and the oxidizing gas humidifier 105 are the same in basic configuration as each other, the fuel gas humidifier 103 will be explained herein.

Fig. 3 is a cross-sectional view schematically showing a schematic configuration of the fuel gas humidifier 103 shown in Fig. 1. In Fig. 3, a vertical direction of the fuel gas humidifier 103 is shown as a vertical direction of the drawing, and a part of the fuel gas humidifier 103 is omitted.

As shown in Fig. 3, the fuel gas humidifier 103 includes: a humidifying cell stack body 69 formed by stacking humidifying cells 63, each of whose entire shape is a plate shape, in a thickness direction of the humidifying cell 63; first and second end plates (both of which are not shown) disposed on both ends, respectively, of the humidifying cell stack body 69; and fasteners, not shown, which fasten the humidifying cell stack body 69 and the first and second end plates in a stack direction of the humidifying cells 63. The humidifying cell 63 having a plate shape extends in parallel with a vertical surface, and the stack direction of the humidifying cells 63 is a horizontal direction.

The humidifying cell 63 includes a pair of separators 61 each having a plate shape, and a moisture permeable membrane 62 having a membrane piece shape. The manifold holes, such as a fuel gas supplying manifold hole 64 and a cooling water supplying manifold hole 65, penetrating through the moisture permeable membrane 62 in the thickness direction are formed at a peripheral portion of the moisture permeable membrane 62. The moisture permeable membrane 62 can be constituted by a membrane (for example, Hipore 7025 (Product Name) produced by Asahi Kasei Chemicals Corporation) provided with a large number of minute holes which allow steam to permeate there and penetrate through the membrane in the thickness direction of the membrane or a membrane (for example, perfluoro sulfonic acid resin (for example, Nafion (Product Name) produced by Du Pond)) having steam permeability. The moisture permeable membrane 62 is not especially limited as long as the steam can permeate the moisture permeable membrane 62.

A pair of the separators 61 each having the plate shape are disposed to sandwich the moisture permeable membrane 62. The manifold holes, such as the fuel gas supplying manifold hole 64 and the cooling water supplying manifold hole 65, penetrating through the separator 61 in the thickness direction are formed at a peripheral portion of the separator 61. O rings 68 are disposed around the manifold holes. Moreover, a groove-like cooling water channel 66 through which the cooling water flows is formed in a serpentine shape on one main surface of the separator 61 so as to connect the cooling water supplying manifold hole 65 and the cooling water discharging manifold hole (not shown), and the fuel gas channel 67 through which the fuel gas flows is formed in a serpentine shape on the other main surface of the separator 61 so as to connect the fuel gas supplying manifold hole 64 and the fuel gas discharging manifold hole (not shown). Herein, the cooling water channel 66 and the fuel gas channel 67 are formed in a serpentine shape. However, the present embodiment is not limited to this, and the cooling water channel 66 and the fuel gas channel 67 may be formed in any shape as long as the fuel gas and the cooling water flow through substantially the entire region of the separator 61.

By stacking such humidifying cells 63 in the thickness direction, the humidifying cell stack body 69 is formed. By stacking the humidifying cells 63, the manifold holes, such as the fuel gas supplying manifold holes 64 and the cooling water supplying manifold holes 65, formed on the separators 61 and the moisture permeable membranes 62 are connected to one another in the thickness direction to form the manifolds, such as a fuel gas supplying manifold 164 and a cooling water supplying manifold 165.

With this, by supplying the cooling water to the cooling water channels 66 of the humidifying cells 63 and supplying the fuel gas to the fuel gas channels 67 of the humidifying cells 63, the moisture contained in the cooling water permeates the moisture permeable membrane 62 to humidify the fuel gas.

Then, the fuel cell system 100 according to Embodiment 1 is configured such that the water surface of the cooling water tank 106 is higher than an upper end portion of the moisture permeable membrane 62 of the humidifying cell 63. As described above, the water level of the cooling water tank 106 is detected by the water level detector 109, and is controlled by the controller 108 so as not to become lower than a predetermined water level threshold. Therefore, as long as the fuel gas humidifier 103, the oxidizing gas humidifier 105, and the cooling water tank 106 are arranged such that the water surface of the cooling water tank 106 is higher than the upper end portion of the moisture permeable membrane 62 of the humidifying cell 63, a part of a bottom surface of the cooling water tank 106 or the entire bottom surface of the cooling water tank 106 may be lower than the upper end portions of the moisture permeable membranes 62 of the fuel gas humidifier 103 and the oxidizing gas humidifier 105.

Moreover, in Embodiment 1, since the city gas (gas pressure of 1.0 kPa to 2.5 kPa) is used as the pressure compensating gas, it is preferable that the water level threshold in the cooling water tank 106 be set such that the water surface of the cooling water in the cooling water tank 106 is higher than the upper end portions of the moisture permeable membranes 62 of the fuel gas humidifier 103 and the oxidizing gas humidifier 105 by 25 cm or more. With this, even in a case where the fuel cell system 100 is not operating and the cooling water is not circulating (to be specific, even in a case where the pressure generated by the operation of the second pump 142 is not applied to the cooling water), the pressure (water pressure) of 2.5 kPa or more can be stably applied to the cooling water channel 66 sides of the moisture permeable membranes 62 of the fuel gas humidifier 103 and the oxidizing gas humidifier 105. Therefore, even in a case where the pressure compensating gas is supplied when the fuel cell system 100 is not operating, the pressure in the cooling water channel 66 of the fuel gas humidifier 103 is higher than the pressure in the fuel gas channel 67 and the pressure in the cooling water channel 66 of the oxidizing gas humidifier 105 is higher than the pressure in the oxidizing gas channel, so that it is possible to suppress a phenomenon in which the pressure compensating gas (including the purge gas) leaks through the moisture permeable membrane 62 to the cooling water channel 66 and the cooling water passage and remains in the cooling water channel 66 and the cooling water passage to disturb the normal circulation of the cooling water in the cooling water passage.

Herein, since the city gas is used as the pressure compensating gas, it is preferable that the water surface of the cooling water tank 106 be higher than the upper end portions of the moisture permeable membranes 62 of the fuel gas humidifier 103 and the oxidizing gas humidifier 105 by 25 cm or more. However, the present embodiment is not limited to this in a case where the pressure of the pressure compensating gas is not in a range from 1.0 kPa to 2.5 kPa. For example, in a case where used as the pressure compensating gas is an LPG gas having the pressure of 3.3 kPa, it is preferable that the water surface of the cooling water in the cooling water tank 106 be higher than the upper end portions of the moisture permeable membranes 62 of the fuel gas humidifier 103 and the oxidizing gas humidifier 105 by 33 cm or more. As above, the height of the water surface of the cooling water in the cooling water tank 106 with respect to the positions of the upper end portions of the moisture permeable membranes 62 of the fuel gas humidifier 103 and the oxidizing gas humidifier 105 changes depending on the pressure of the pressure compensating gas. As long as the water surface of the cooling water in the cooling water tank 106 is higher than at least the positions of the upper end portions of the moisture permeable membranes 62 of the fuel gas humidifier 103 and the oxidizing gas humidifier 105, a predetermined pressure (water pressure) is stably applied to the cooling water channel 66 sides of the moisture permeable membranes 62 of the fuel gas humidifier 103 and the oxidizing gas humidifier 105 even when the cooling water is not circulating. Therefore, it is possible to suppress the amount of leakage of the pressure compensating gas to the cooling water channel 66 sides at the time of the pressure compensating operation. However, for the purpose of reducing the amount of leakage of the pressure compensating gas close to zero, it is preferable that the water level threshold of the cooling water tank 106 be determined such that the pressure of the pressure compensating gas is higher than the pressure in the cooling water channel 66 of each of the fuel gas humidifier 103 and the oxidizing gas humidifier 105.

Next, the controller 108 will be explained.

The controller 108 is constituted by a computer, such as a microcomputer, and includes: a calculation processing portion, such as a CPU; a storage portion, such as a memory; a display portion, such as a monitor; an operation input portion, such as a keyboard; and a clock portion having a calendar function (all of which are not shown). The calculation processing portion reads out and executes a predetermined control program stored in the storage portion to carry out various control operations regarding the fuel cell system 100. Moreover, the calculation processing portion processes data stored in the storage portion and date input from the operation input portion.

Here, in the present specification, the controller denotes not only a single controller but also a group of controllers which execute control operations of the fuel cell system in cooperation with one another. Therefore, the controller 108 does not have to be constituted by a single controller, and may be constituted by a plurality of controllers which are dispersively arranged and control the fuel cell system in cooperation with one another.

### Operations of Fuel Cell System

First, general operations performed at the time of the electric power generation in the fuel cell 101 of the fuel cell system 100 according to Embodiment 1 will be explained in reference to Fig. 1. The controller 108 causes the fuel cell system 100 to carry out the following operations.

To prevent the material gas from flowing through the bypass passage 136 at the time of the electric power generation, the first switching device 121 operates such that the first port 121a is communicated with the third port 121c and the second port 121b closes to supply the material gas through the material gas supplying passage 131. Moreover, the second switching device 122 operates such that the first port 122a is communicated with the third port 122c and the second port 122b closes to supply the fuel gas through the fuel gas supplying passage 132. Further, the third switching device 123 operates such that the first port 123a is communicated with the second port 123b and the third port 123c closes to supply the oxidizing gas through the oxidizing gas supplying passage 134.

With this, as shown in Fig. 1, the material gas is supplied from the material gas supplier 110 through the material gas supplying passage 131 to the fuel processor 102, and the fuel gas is generated in the fuel processor 102. The generated fuel gas is supplied through the fuel gas supplying passage 132 to the anode of the fuel cell 101. Moreover, the oxidizing gas is supplied from the oxidizing gas supplier 104 through the oxidizing gas supplying passage 134 to the cathode of the fuel cell 101. At this time, as described above, the fuel gas and the oxidizing gas (each of which is hereinafter referred to as "reactant gas") carry out moisture exchange with the cooling water to be humidified in the fuel gas humidifier 103 and the oxidizing gas humidifier 105, respectively.

The fuel gas and the oxidizing gas supplied to the fuel cell 101 react with each other in the fuel cell 101 to generate water. Moreover, the unreacted fuel gas is supplied through the off gas passage 133 to the burner 102a as the off gas. Meanwhile, the unreacted oxidizing gas flows through the oxidizing gas discharging passage 135 to be discharged to the outside of the fuel cell system 100.

Moreover, the cooling water is supplied from the cooling water tank 106 through the cooling water supplying passage 152 to the fuel cell 101. The cooling water supplied to the fuel cell 101 flows through the inside of the fuel cell 101 to recover the heat generated by the electrochemical reaction between the fuel gas and the oxidizing gas. Thus, the inside of the fuel cell 101 is maintained at a predetermined temperature. The cooling water having recovered the heat of the inside of the fuel cell 101 is supplied through the first cooling water discharging passage 153a to the primary passage of the heat exchanger 107. At this time, as described above, the cooling water carries out the moisture exchange with the reactant gases to humidify the reactant gases in the fuel gas humidifier 103 and the oxidizing gas humidifier 105. The cooling water having been supplied to the primary passage of the heat exchanger 7 carries out the heat exchange with the water flowing through the secondary passage of the heat exchanger 107 to be supplied through the second cooling water discharging passage 153b to the cooling water tank 106.

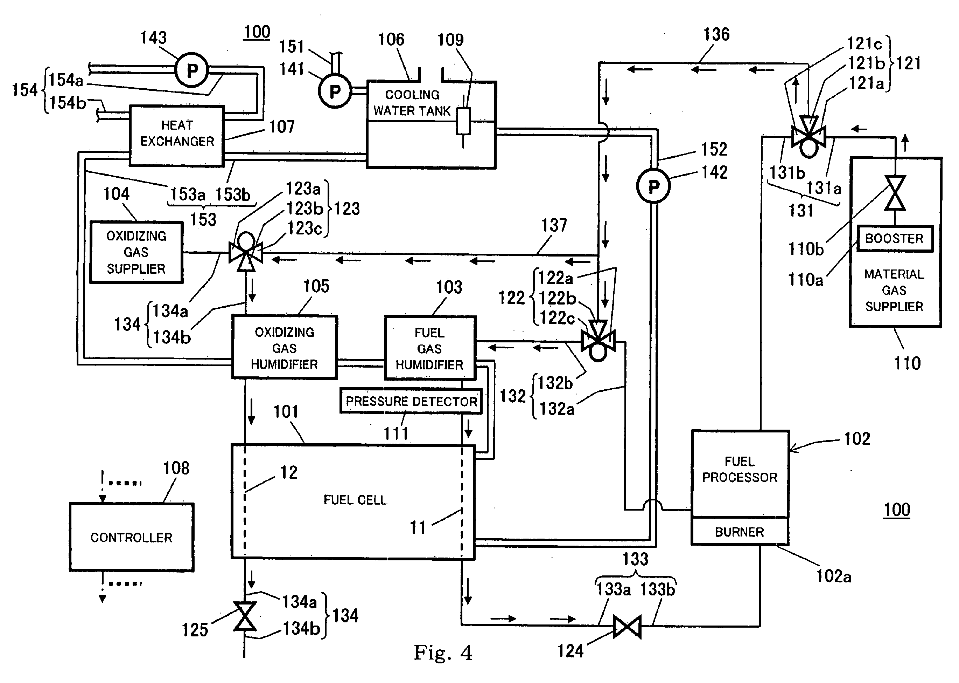

Next, the stop operation of the fuel cell system 100 will be explained in reference to Fig. 4.

Fig. 4 is a diagram schematically showing the flow of the purge gas and the flow of the pressure compensating gas in the stop operation of the fuel cell system 100 shown in Fig. 1.

In the present invention, the stop operation is defined as an operation which starts from the output of a stop signal from the controller 108 and ends by the stop of the operation of the fuel cell system 100. Note that a state where the fuel cell system 100 stops its operation denotes a state where the controller 108 is operating but the components except for the controller 108 are not operating. The controller 108 outputs the stop signal when a stop command is input by a stop button or when the load does not request the electric power generation (when load electric power detected by a load electric power detector, not shown, becomes a predetermined threshold or lower). Moreover, the stop of the electric power generation is carried out such that: the output of the inverter for outputting the generated electric power of the fuel cell 101 to the outside is set to zero; and the inverter electrically separates the fuel cell 101 from the load.

When the controller 108 outputs the stop signal, the second pump 142 stops operating to stop the supply of the cooling water from the cooling water tank 106 to the cooling water internal passage of the fuel cell 101. Moreover, the first switching device 121 operates such that the first port 121a is communicated with the second port 121b and the third port 121c closes to supply the material gas through the bypass passage 136. Further, the second switching device 122 operates such that the second port 122b is communicated with the third port 122c and the first port 122a closes so as not to supply the fuel gas through the fuel gas supplying passage 132. Further, the third switching device 123 operates such that the third port 123c is communicated with the second port 123b and the first port 123a closes so as not to supply the oxidizing gas through the oxidizing gas supplying passage 134. With this, the supply of the fuel gas from the fuel processor 102 to the fuel cell 101 stops, and the supply of the oxidizing gas from the oxidizing gas supplier 104 to the fuel cell 101 stops.

Next, the material gas is supplied as the purge gas from the material gas supplier 110 to the first material gas supplying passage 131a. The supplied purge gas flows through the purge gas passage 136 and the second fuel gas supplying passage 132b to be supplied to the fuel gas internal passage 11 of the fuel cell 101. Thus, the fuel gas in the fuel gas internal passage 11 is purged by the purge gas. The purged fuel gas is supplied through the off gas passage 133 to the burner 102a. Moreover, a part of the purge gas flowing through the purge gas passage 136 flows through the cathode purge gas passage 137 and the second oxidizing gas supplying passage 134b to be supplied to the oxidizing gas internal passage 12 of the fuel cell 101. Thus, the oxidizing gas in the oxidizing gas internal passage 12 is purged by the purge gas. The purged oxidizing gas flows through the oxidizing gas discharging passage 135 to be discharged to the outside of the fuel cell system 100.

Then, after the fuel gas internal passage 11 and the oxidizing gas internal passage 12 are entirely purged by the purge gas, the off gas passage on-off valve 124 and the oxidizing gas discharging passage on-off valve 125 are closed to close the downstream end of the off gas passage 133a and the downstream end of the first oxidizing gas discharging passage 135a. Next, the supply of the purge gas stops by stopping the operation of the pressure increasing device 110a of the material gas supplier 110 and closing the on-off valve 110b. The second switching device 122 operates such that the second port 122b is not connected to either the first port 122a or the third port 122c, and the third switching device 123 operates such that the second port 123b is not connected to either the first port 123a or the third port 123c, thereby closing the upstream end of the second fuel gas supplying passage 132b and the upstream end of the second oxidizing gas supplying passage 134b.

With this, in the gas passage constituted by the material gas supplying passage 131, the fuel gas supplying passage 132, the fuel gas internal passage 11, the off gas passage 133, the oxidizing gas supplying passage 134, the oxidizing gas internal passage 12, and the oxidizing gas discharging passage 135, both ends of a specific section including the fuel gas humidifier 103, i.e., both ends of the fuel gas passage extending from the second fuel gas supplying passage 132b through the fuel gas internal passage 11 to the first off gas passage 133a are closed, and both ends of a specific section including the oxidizing gas humidifier 105, i.e., both ends of the oxidizing gas passage extending from the second oxidizing gas supplying passage 134b through the oxidizing gas internal passage 12 to the first oxidizing gas discharging passage 135a are closed.

Next, when the pressure detector 111 detects that the pressure in the second fuel gas supplying passage 132b that is a part of the specific section of the gas passage is the negative pressure, i.e.; when the pressure in the fuel gas internal passage 11 of the fuel cell 101 is the negative pressure, the controller 108 causes the on-off valve 110b of the material gas supplier 110 to open, causes the second switching device 122 to operate such that the second port 122b is communicated with the third port 122c and the first port 122a closes, and causes the third switching device 123 to operate such that the third port 123c is communicated with the second port 123b and the first port 123a closes. With this, the material gas is supplied as the pressure compensating gas from the material gas supplier 110 by the pressure of the city gas, and this compensates the pressure in the specific section including the fuel gas humidifier 103 and the pressure in the specific section including the oxidizing gas humidifier 105.

At this time, the pressure of the pressure compensating gas flowing through the fuel gas channel 67 is applied to the moisture permeable membrane 61 of the fuel gas humidifier 103, and the pressure of the pressure compensating gas flowing through the oxidizing gas channel is applied to the moisture permeable membrane 61 of the oxidizing gas humidifier 105. However, since the water surface of the cooling water in the cooling water tank 106 is set to be higher than the upper end portions of the moisture permeable membranes 62 of the fuel gas humidifier 103 and the oxidizing gas humidifier 105 by 25 cm or more, the pressure (water pressure) of 2.5 kPa or more is stably applied to the cooling water channel 66 sides of the moisture permeable membranes 62 of the fuel gas humidifier 103 and the oxidizing gas humidifier 105. Therefore, since the pressure in the cooling water channel 66 of the fuel gas humidifier 103 is higher than the pressure in the fuel gas channel 67, and the pressure in the cooling water channel 66 of the oxidizing gas humidifier 105 is higher than the pressure in the oxidizing gas channel (since each of a water head differential pressure between the entrance of the fuel gas humidifier 103 on the first cooling water discharging passage 153a and the water surface of the cooling water tank 106 and a water head differential pressure between the entrance of the oxidizing gas humidifier 105 on the first cooling water discharging passage 153a and the water surface of the cooling water tank 106 is higher than the pressure of the pressure compensating gas), it is possible to suppress the phenomenon in which the pressure compensating gas (including the purge gas) leaks through the moisture permeable membrane 62 to the cooling water channel 66 and the cooling water passage and remains in the cooling water channel 66 and the cooling water passage to disturb the normal circulation of the cooling water in the cooling water passage.

As above, in accordance with the fuel cell system 100 of Embodiment 1, when carrying out the pressure compensating operation while the fuel cell system 100 is not operating, the pressure compensating gas can be prevented from leaking through the moisture permeable membrane 61 of each of the fuel gas humidifier 103 and the oxidizing gas humidifier 105 to the cooling water passage and remaining in the cooling water passage. Therefore, it is possible to prevent the normal circulation of the cooling water in the cooling water passage from being disturbed. In addition, it is possible to avoid risks, such as danger to public health, and fire and explosion of devices, caused by the leakage of the pressure compensating gas from the cooling water passage to the outside of the fuel cell system 100.

Herein, the pressure detector 111 is disposed on the second fuel gas supplying passage 132b. However, the installation location of the pressure detector 111 is not limited to this as long as it is within the specific section of the gas passage.

Moreover, in the fuel gas passage, the section extending from the second fuel gas supplying passage 132b through the fuel gas internal passage 11 to the first off gas passage 133a is set as the specific section of the present invention. However, this is just an exemplification, and the section may be any section as long as it is a section of the fuel gas passage on which section at least the fuel gas humidifier 103 is disposed. One example is a configuration in which: the second fuel gas supplying passage 132b is set as the specific section; a valve is additionally disposed at a lower end of the second fuel gas supplying passage 132b (i.e., disposed on the fuel gas passage extending between the fuel gas humidifier 103 and the fuel cell 101), and the pressure compensating gas is supplied from the material gas supplier as the pressure compensating operation when the gas pressure in the fuel gas passage extending between the valve and the second switching device 122 lowers. Similarly, regarding the oxidizing gas passage, the section may be any section as long as it is a section of the oxidizing gas passage on which section at least the oxidizing gas humidifier is disposed.

### Embodiment 2

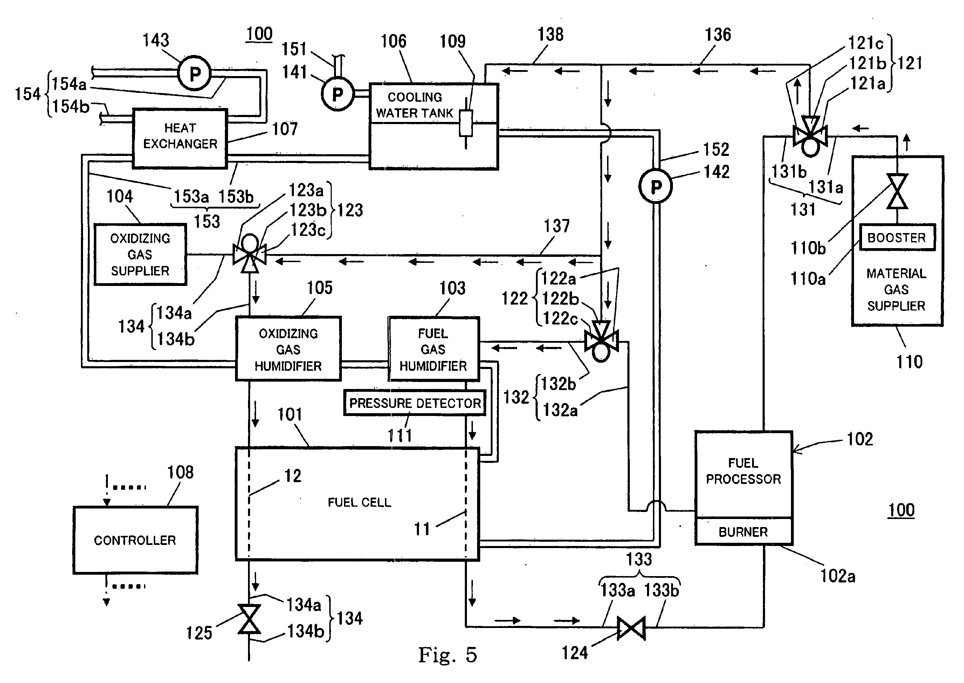

Fig. 5 is a schematic diagram showing a schematic configuration of the fuel cell system 100 according to Embodiment 2 of the present invention.

As shown in Fig. 5, the fuel cell system according to Embodiment 2 is the same in basic configuration as the fuel cell system 100 according to Embodiment 1 but is different from the fuel cell system 100 according to Embodiment 1 in that: the cooling water tank 106 is hermetically sealed; and a part of the pressure compensating gas is supplied to the cooling water tank 106. Specifically, an upstream end of a pressure compensating gas supplying passage 138 is connected to a portion of the bypass passage 136, and a downstream end thereof is connected to the upper end portion of the cooling water tank 106.

With this, in a case where the pressure compensating gas is supplied when the fuel cell system 100 is not operating, the pressure compensating gas is supplied to the cooling water tank 106. Therefore, the pressure of the supplied pressure compensating gas is applied to the water surface of the cooling water in the cooling water tank 106. To be specific, even when the cooling water is not circulating, the pressure of the pressure compensating gas and a predetermined water pressure generated since the water surface of the cooling water in the cooling water tank 106 is higher than the upper end portions of the moisture permeable membranes 62 of at least the fuel gas humidifier 103 and the oxidizing gas humidifier 105 are applied to the cooling water channel 66 sides of the moisture permeable membranes 62 of the fuel gas humidifier 103 and the oxidizing gas humidifier 105.

Therefore, since the pressure in the cooling water channel 66 of the fuel gas humidifier 103 is higher than the pressure in the fuel gas channel 67, and the pressure in the cooling water channel 66 of the oxidizing gas humidifier 105 is higher than the pressure in the oxidizing gas channel, it is possible to suppress the phenomenon in which the pressure compensating gas (including the purge gas) leaks through the moisture permeable membrane 62 to the cooling water channel 66 and the cooling water passage and remains in the cooling water channel 66 and the cooling water passage to disturb the normal circulation of the cooling water in the cooling water passage.

To prevent the pressure compensating gas from flowing into the cooling water supplying passage 152, it is preferable that the downstream end of the pressure compensating gas supplying passage 138 be connected to a portion of the cooling water tank 106 which portion is higher than an uppermost level of the water surface of the cooling water.

The fuel cell system 100 of Embodiments 1 and 2 includes both the oxidizing gas humidifier 105 and the fuel gas humidifier 103. However, even if the fuel cell system 100 includes only one of them, the same effects as above can be obtained by the configuration in which the water surface of the cooling water in the cooling water tank 106 is higher than the upper end portion of the moisture permeable membrane 62 of the humidifier.

Moreover, in the fuel cell system of Embodiments 1 and 2, the material gas supplied from the material gas supplier 110 is used as the pressure compensating gas. However, the type of the pressure compensating gas is not limited to this. For example, in a case where the fuel gas is supplied from a hydrogen storage, such as a hydrogen bomb, the fuel gas may be used as the pressure compensating gas supplied to the fuel gas passage. Moreover, the oxidizing gas supplied from the oxidizing gas supplier 104 may be used as the pressure compensating gas supplied to the oxidizing gas passage.

### Embodiment 3

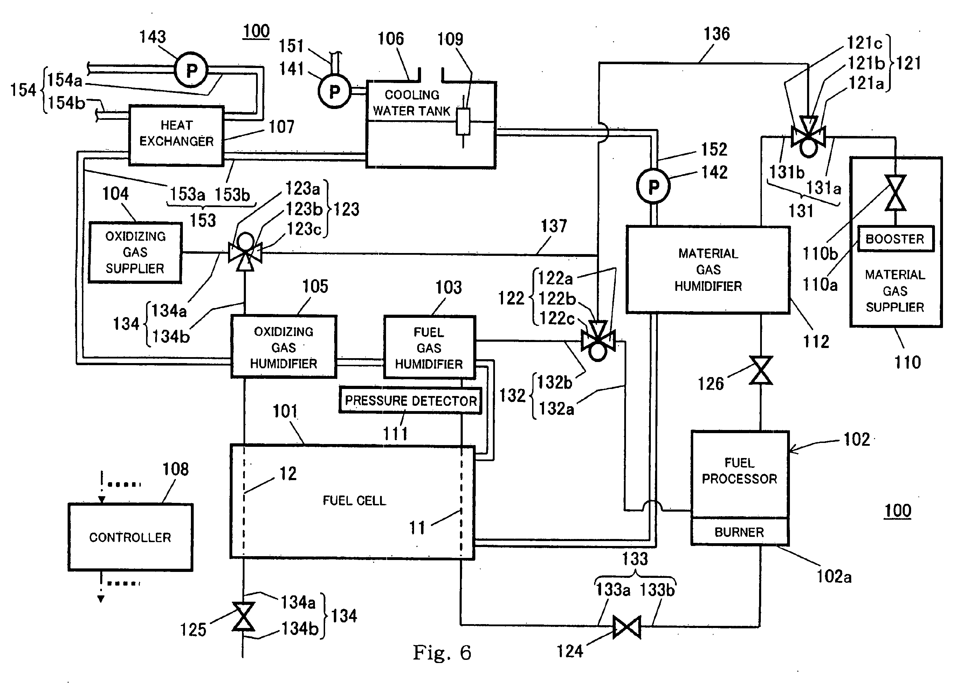

Fig. 6 is a schematic diagram showing a schematic configuration of the fuel cell system according to Embodiment 3 of the present invention.

As shown in Fig. 6, the fuel cell system 100 according to Embodiment 3 of the present invention is the same in basic configuration as the fuel cell system 100 according to Embodiment 1 but is different from the fuel cell system 100 according to Embodiment 1 in that: a material gas supplying passage on-off valve 126 is disposed on a portion of the second material gas supplying passage 131b; and a material gas humidifier 112 is disposed on both the second material gas supplying passage 131b and the cooling water supplying passage 152 so as to be located upstream of the material gas supplying passage on-off valve 126 disposed on the second material gas supplying passage 131b and humidify the material gas supplied to the fuel processor 102. Further, the fuel cell system 100 according to Embodiment 3 is different from the fuel cell system 100 according to Embodiment 1 in that: a portion of the second material gas supplying passage 131b which portion extends between the first switching device 121 and the material gas supplying passage on-off valve 126 is the specific section including the material gas humidifier 112; and when the pressure in the specific section lowers, the material gas is supplied from the material gas supplier to compensate the pressure in at least a channel (hereinafter referred to as "material gas channel") in the material gas humidifier 112 through which channel the material gas flows. The material gas humidifier 112 is the same in configuration as the fuel gas humidifier 103, so that a detailed explanation thereof is omitted.

Then, in the stop operation of the fuel cell system 100 according to Embodiment 3, when the pressure detector 111 detects that the pressure in the second fuel gas supplying passage 132b that is a part of the specific section of the gas passage is the negative pressure, the controller 108 causes the first switching device 121 to operate such that the first port 121a is communicated with both the second port 121b and the third port 121c, causes the second switching device 122 to operate such that the second port 122b is communicated with the third port 122c and the first port 122a closes, and causes the third switching device 123 to operate such that the third port 123c is communicated with the second port 123b and the first port 123a closes. Next, the controller 108 causes the on-off valve 110b of the material gas supplier 110 to open with the off gas passage on-off valve 124, the oxidizing gas discharging passage on-off valve 125, and the material gas supplying passage on-off valve 126 closed. With this, the material gas is supplied as the pressure compensating gas to compensate the pressure in the specific section including the fuel gas humidifier 103, the pressure in the specific section including the oxidizing gas humidifier 105, and the pressure in the specific section including the material gas humidifier 112.

At this time, as with the case of the stop operation of the fuel cell system 100 according to Embodiment 1, the pressure of the pressure compensating gas flowing through the fuel gas channel 67 is applied to the moisture permeable membrane 61 of the fuel gas humidifier 103, the pressure of the pressure compensating gas flowing through the oxidizing gas channel is applied to the moisture permeable membrane 61 of the oxidizing gas humidifier 105, and the pressure of the pressure compensating gas flowing through the material gas channel is applied to the moisture permeable membrane 61 of the material gas humidifier 112. However, since the water surface of the cooling water in the cooling water tank 106 is set to be higher than the upper end portions of the moisture permeable membranes 62 of the fuel gas humidifier 103, the oxidizing gas humidifier 105, and the material gas humidifier 112 by 25 cm or more, the pressure (water pressure) of 2.5 kPa or more is stably applied to the cooling water channel 66 sides of the moisture permeable membranes 62 of the fuel gas humidifier 103, the oxidizing gas humidifier 105, and the material gas humidifier 112. Therefore, since the pressure in the cooling water channel 66 of the fuel gas humidifier 103 is higher than the pressure in the fuel gas channel 67, the pressure in the cooling water channel 66 of the oxidizing gas humidifier 105 is higher than the pressure in the oxidizing gas channel, and the pressure in the cooling water channel 66 of the material gas humidifier 112 is higher than the pressure in the material gas channel (since each of the water head differential pressure between the entrance of the fuel gas humidifier 103 on the first cooling water discharging passage 153a and the water surface of the cooling water tank 106, the water head differential pressure between the entrance of the oxidizing gas humidifier 105 on the first cooling water discharging passage 153a and the water surface of the cooling water tank 106, and a water head differential pressure between the entrance of the material gas humidifier 112 on the cooling water supplying passage 152 and the water surface of the cooling water tank 106 is higher than the pressure of the pressure compensating gas), it is possible to suppress the phenomenon in which the pressure compensating gas (including the purge gas) leaks through the moisture permeable membrane 62 to the cooling water channel 66 and the cooling water passage and remains in the cooling water channel 66 and the cooling water passage to disturb the normal circulation of the cooling water in the cooling water passage.

As above, in accordance with the fuel cell system 100 of Embodiment 3, when carrying out the pressure compensating operation while the fuel cell system 100 is not operating, the pressure compensating gas can be prevented from leaking through the moisture permeable membrane 61 of each of the fuel gas humidifier 103, the oxidizing gas humidifier 105, and the material gas humidifier 112 to the cooling water passage and remaining in the cooling water passage. Therefore, it is possible to prevent the normal circulation of the cooling water in the cooling water passage from being disturbed. In addition, it is possible to avoid risks, such as danger to public health, and fire and explosion of devices, caused by the leakage of the pressure compensating gas from the cooling water passage to the outside of the fuel cell system 100.

The fuel cell system 100 of Embodiment 3 includes both the oxidizing gas humidifier 105 and the fuel gas humidifier 103. However, even if the fuel cell system 100 includes only one of them, the same effects as above can be obtained by the configuration in which the water surface of the cooling water in the cooling water tank 106 is higher than the upper end portion of the moisture permeable membrane 62 of the humidifier.

Moreover, in the fuel cell system of Embodiment 3, the material gas supplied from the material gas supplier 110 is used as the pressure compensating gas. However, the type of the pressure compensating gas is not limited to this. For example, in a case where the fuel gas is supplied from a hydrogen storage, such as a hydrogen bomb, the fuel gas may be used as the pressure compensating gas supplied to the fuel gas passage. Moreover, the oxidizing gas supplied from the oxidizing gas supplier 104 may be used as the pressure compensating gas supplied to the oxidizing gas passage.

In accordance with the fuel cell system 100 of Embodiments 1 to 3, to detect the lowering of the pressure in the specific section of the gas passage, the pressure detector 111 is disposed on the specific section to directly detect the pressure. However, the fuel cell system 100 may be configured such that: a timer (not shown) is provided instead of the pressure detector 111; and each time an elapsed time since the start of the stop operation of the fuel cell system 100 or an elapsed time since the end of the supply of the pressure compensating gas becomes a time at which the pressure in the specific section is presumed to become the negative pressure, the controller 108 controls the on-off valves, the second switching device 122, and the third switching device 123 in the above manner to supply the pressure compensating gas to the specific section. This configuration utilizes a property in which: the temperature of the fuel cell system 100 decreases as the elapsed time since the start of the stop operation of the fuel cell system 100 increases; the gas in the gas passage contracts; and the pressure in the gas passage becomes the negative pressure. Thus, the present invention is not limited to a method for directly detecting the pressure by the pressure detector 111 for detecting the lowering of the pressure in the specific section, and a method for indirectly detecting the pressure by utilizing the timer or the like may be used as long as it can detect the pressure in the specific section.

Moreover, the fuel cell system 100 according to Embodiments 1 to 3 is configured such that since the material gas is supplied through the bypass passage 136 to the specific section when carrying out the pressure compensating operation with respect to the specific section, the controller 108 controls not only the on-off valve 110b of the material gas supplier 110 but also the first switching device 121, the second switching device 122, and the third switching device 123. However, the fuel cell system 100 may be configured such that: a pressure compensating gas supply source (for example, a nitrogen bomb or an LPG bomb) having a predetermined supply pressure, a pressure compensating gas passage directly connecting the pressure compensating gas supply source and each of the specific sections, and an on-off valve disposed on the pressure compensating gas passage as the pressure compensating gas supplier are additionally provided; and when the pressure in the specific section lowers, the controller 108 causes the on-off valve to open to supply the pressure compensating gas to the specific section. To be specific, the pressure compensating gas supplier recited in CLAIMS of the present application includes an on-off valve disposed on a pressure compensating gas passage, and the pressure compensating operation can be realized by opening at least this on-off valve.

From the foregoing explanation, many modifications and other embodiments of the present invention are obvious to one skilled in the art. Therefore, the foregoing explanation should be interpreted only as an example, and is provided for the purpose of teaching the best mode for carrying out the present invention to one skilled in the art. The structures and/or functional details may be substantially modified within the scope of the present invention.

### Industrial Applicability

In accordance with the fuel cell system of the embodiment of the present invention, when carrying out the pressure compensating operation with respect to the gas passage including the humidifier for using the cooling water to humidify the reactant gas supplied to the fuel cell, it is possible to suppress the phenomenon in which the pressure compensating gas leaks through the humidifier to the cooling water passage and remains in the cooling water passage to disturb the normal circulation of the cooling water in the cooling water passage. Therefore, the fuel cell system of the embodiment of the present invention can be industrially utilized as a safe fuel cell system.

## Claims

1. A fuel cell system comprising:
a fuel cell;
a gas passage through which an electric power generating gas used for electric power generation in the fuel cell flows;
a cooling water passage through which cooling water for cooling down the fuel cell flows;
a cooling water tank disposed on the cooling water passage to store the cooling water;
a humidifier having a moisture permeable membrane and being configured to carry out moisture exchange between the cooling water flowing through the cooling water passage and the electric power generating gas flowing through the gas passage via the moisture permeable membrane; and
a pressure compensating gas supplier configured to supply a pressure compensating gas to a specific section including the humidifier on the gas passage when a pressure in the gas passage lowers, wherein
a water surface of the cooling water tank is higher than an upper end of the moisture permeable membrane of the humidifier.

2. The fuel cell system according to claim 1, wherein the water surface of the cooling water tank is located such that a pressure in the cooling water passage in the humidifier is higher than the pressure in the gas passage in the humidifier when the pressure compensating gas supplier supplies the pressure compensating gas.

3. The fuel cell system according to claim 1, wherein the water surface of the cooling water tank is located such that a water head differential pressure between an entrance of the humidifier on the cooling water passage and the cooling water tank is higher than a pressure of the pressure compensating gas supplied from the pressure compensating gas supplier to the specific section including the humidifier on the gas passage.

4. The fuel cell system according to claim 1, further including a closing device configured to close both ends of the specific section including the humidifier on the gas passage, wherein
the pressure compensating gas supplier is configured to supply the pressure compensating gas to the specific section when both ends of the specific section are closed by the closing device, and a pressure in the specific section lowers.

5. The fuel cell system according to claim 1, wherein the cooling water tank is open to atmosphere.

6. The fuel cell system according to claim 1, further comprising a pressure compensating gas supplying passage through which the pressure compensating gas supplied from the pressure compensating gas supplier flows, wherein
the cooling water tank is hermetically sealed, and the pressure compensating gas supplying passage is connected to the cooling water tank.

7. The fuel cell system according to claim 5 or 6, further comprising: a water level detector configured to detect a water level of the cooling water tank; a water supplier configured to supply the cooling water to the cooling water tank; and a controller, wherein
the controller causes the water supplier to supply the water to the cooling water tank when the water level detected by the water level detector becomes less than a water level threshold.

8. The fuel cell system according to claim 1, wherein a water level of the cooling water tank is higher than the upper end of the moisture permeable membrane of the humidifier by 25 cm or more.

## Patentansprüche

1. Brennstoffzellensystem, umfassend:
eine Brennstoffzelle;
eine Gasleitung, durch die ein elektrische Energie erzeugendes Gas strömt, das zur Erzeugung elektrischer Energie in der Brennstoffzelle verwendet wird;
eine Kühlwasserleitung, durch die Kühlwasser zum Herunterkühlen der Brennstoffzelle strömt;
einen an der Kühlwasserleitung eingerichteten Kühlwassertank, um das Kühlwasser zu speichern;
einen Befeuchter, der eine feuchtigkeitsdurchlässige Membran aufweist und der ausgebildet ist, um Feuchtigkeitsaustausch zwischen dem Kühlwasser, das durch die Kühlwasserleitung strömt, und dem elektrische Energie erzeugenden Gas, das durch die Gasleitung strömt, via die feuchtigkeitsdurchlässige Membran auszuführen; und
eine Vorrichtung zur Zuführung von Druckausgleichsgas, die ausgebildet ist, um ein Druckausgleichsgas einem spezifischen Abschnitt, einschließlich des Befeuchters, an der Gasleitung zuzuführen, wenn ein Druck in der Gasleitung sinkt, wobei
eine Wasseroberfläche des Kühlwassertanks höher liegt als ein oberes Ende der feuchtigkeitsdurchlässigen Membran des Befeuchters.

2. Brennstoffzellensystem nach Anspruch 1, wobei die Wasseroberfläche des Kühlwassertanks so angeordnet ist, dass ein Druck in der Kühlwasserleitung im Befeuchter höher ist als der Druck in der Gasleitung im Befeuchter, wenn die Vorrichtung zur Zuführung von Druckausgleichsgas das Druckausgleichsgas zuführt.

3. Brennstoffzellensystem nach Anspruch 1, wobei die Wasseroberfläche des Kühlwassertanks so angeordnet ist, dass ein Druckhöhendifferenzdruck zwischen einem Einlass des Befeuchters an der Kühlwasserleitung und dem Kühlwassertank höher ist als ein Druck des Druckausgleichsgases, das aus der Vorrichtung zur Zuführung von Druckausgleichsgas dem spezifischen Abschnitt, einschließlich des Befeuchters, an der Gasleitung zugeführt wird.

4. Brennstoffzellensystem nach Anspruch 1, das weiterhin eine Schließvorrichtung beinhaltet, die ausgebildet ist, um beide Enden des spezifischen Abschnitts, einschließlich des Befeuchters, an der Gasleitung zu schließen, wobei
die Vorrichtung zur Zuführung von Druckausgleichsgas ausgebildet ist, um das Druckausgleichsgas dem spezifischen Abschnitt zuzuführen, wenn beide Enden des spezifischen Abschnitts durch die Schließvorrichtung verschlossen sind, und ein Druck in dem spezifischen Abschnitt sinkt.

5. Brennstoffzellensystem nach Anspruch 1, wobei der Kühlwassertank zur Atmosphäre offen ist.

6. Brennstoffzellensystem nach Anspruch 1, das weiterhin eine Leitung zur Zuführung von Druckausgleichsgas umfasst, durch die das Druckausgleichsgas strömt, das aus der Vorrichtung zur Zuführung von Druckausgleichsgas zugeführt wird, wobei
der Kühlwassertank hermetisch abgedichtet ist, und die Leitung zur Zuführung von Druckausgleichsgas an den Kühlwassertank angeschlossen ist.

7. Brennstoffzellensystem nach Anspruch 5 oder 6, das weiterhin umfasst: einen Wasserstandsdetektor, der ausgebildet ist, um einen Wasserstand des Kühlwassertanks zu erfassen; eine Wasserzuführvorrichtung, die ausgebildet ist, um dem Kühlwassertank das Kühlwasser zuzuführen; und einen Controller, wobei
der Controller die Wasserzuführvorrichtung veranlasst, dem Kühlwassertank das Wasser zuzuführen, wenn der vom Wasserstandsdetektor erfasste Wasserstand niedriger wird als ein Wasserstandsschwellenwert.

8. Brennstoffzellensystem nach Anspruch 1, wobei ein Wasserstand des Kühlwassertanks um 25 cm oder mehr höher liegt als das obere Ende der feuchtigkeitsdurchlässigen Membran des Befeuchters.

## Revendications

1. Système de pile à combustible comprenant :
une pile à combustible ;
un passage à gaz dans lequel s'écoule un gaz de génération d'énergie électrique servant à la génération d'énergie électrique dans la pile à combustible ;
un passage à eau de refroidissement dans lequel s'écoule de l'eau de refroidissement destinée à refroidir la pile à combustible ;
un réservoir d'eau de refroidissement disposé sur le passage à eau de refroidissement et destiné à contenir l'eau de refroidissement ;
un humidificateur présentant une membrane perméable à l'humidité et étant configuré pour permettre l'échange d'humidité entre l'eau de refroidissement s'écoulant dans le passage à eau de refroidissement et le gaz de génération d'énergie électrique s'écoulant dans le passage à gaz par l'intermédiaire de la membrane perméable à l'humidité ; et
un dispositif d'apport de gaz de compensation de pression configuré pour fournir un gaz de compensation de pression à une section spécifique comportant l'humidificateur sur le passage à gaz lorsque la pression régnant dans le passage à gaz baisse, dans lequel une surface d'eau du réservoir d'eau de refroidissement est plus haute qu'une extrémité supérieure de la membrane perméable à l'humidité de l'humidificateur.

2. Système de pile à combustible selon la revendication 1, dans lequel la surface d'eau du réservoir d'eau de refroidissement est mise en place de manière que la pression régnant dans le passage à eau de refroidissement dans l'humidificateur soit supérieure à la pression régnant dans le passage à gaz dans l'humidificateur lorsque le dispositif d'apport de gaz de compensation de pression fournit le gaz de compensation de pression.

3. Système de pile à combustible selon la revendication 1, dans lequel la surface d'eau du réservoir d'eau de refroidissement est mise en place de manière que la pression différentielle de hauteur d'eau entre une entrée de l'humidificateur sur le passage à eau de refroidissement et le réservoir d'eau de refroidissement soit supérieure à la pression du gaz de compensation de pression fourni par le dispositif d'apport de gaz de compensation de pression à la section spécifique comportant l'humidificateur sur le passage à gaz.

4. Système de pile à combustible selon la revendication 1, comportant en outre un dispositif de fermeture configuré pour fermer les deux extrémités de la section spécifique comportant l'humidificateur sur le passage à gaz, dans lequel
le dispositif d'apport de gaz de compensation de pression est configuré pour fournir le gaz de compensation de pression à la section spécifique lorsque les deux extrémités de la section spécifique sont fermées par le dispositif de fermeture et que la pression dans la section spécifique baisse.

5. Système de pile à combustible selon la revendication 1, dans lequel le réservoir d'eau de refroidissement est ouvert à l'atmosphère.

6. Système de pile à combustible selon la revendication 1, comprenant en outre un passage d'apport de gaz de compensation de pression par lequel s'écoule le gaz de compensation de pression fourni par le dispositif d'apport de gaz de compensation de pression, dans lequel le réservoir d'eau de refroidissement est hermétiquement fermé, et le passage d'apport de gaz de compensation de pression est relié au réservoir d'eau de refroidissement.

7. Système de pile à combustible selon la revendication 5 ou 6, comprenant en outre : un détecteur de niveau d'eau configuré pour détecter le niveau d'eau du réservoir d'eau de refroidissement ; un dispositif d'apport d'eau configuré pour fournir de l'eau de refroidissement au réservoir d'eau de refroidissement ; et un organe de commande, dans lequel
l'organe de commande amène le dispositif d'apport d'eau à fournir l'eau au réservoir d'eau de refroidissement lorsque le niveau d'eau détecté par le détecteur de niveau d'eau passe en dessous d'un seuil de niveau d'eau.

8. Système de pile à combustible selon la revendication 1, dans lequel le niveau d'eau du réservoir d'eau de refroidissement est situé plus haut, soit 25 cm ou plus, que l'extrémité supérieure de la membrane perméable à l'humidité de l'humidificateur.
